Europäisches Patentamt

European Patent Office

Office européen des brevets

(11) Veröffentlichungsnummer: **0 517 194 A2**

## (12) EUROPÄISCHE PATENTANMELDUNG

(21) Anmeldenummer: **92109397.7**

(22) Anmeldetag: **03.06.92**

(51) Int. Cl.5: **B26D 7/26**

(30) Priorität: **04.06.91 DE 4118320**

(43) Veröffentlichungstag der Anmeldung:
**09.12.92 Patentblatt 92/50**

(84) Benannte Vertragsstaaten:
**DE ES FR GB IT**

(71) Anmelder: **BULLMER SPEZIALMASCHINEN GmbH**

W-7421 Mehrstetten(DE)

(72) Erfinder: **Jung, Rolf, Dipl.-Ing.**
**Jahnstrasse 3**
**W-7420 Münsingen(DE)**

(74) Vertreter: **Melzer, Wolfgang, Dipl.-Ing.**
**Mitscherlich und Partner, Steinsdorfstrasse 10**
**W-8000 München 22(DE)**

(54) Zuschneidevorrichtung für Flachmaterial wie Stoffe, Folien oder dergleichen.

(57) Bei einer Zuschneidevorrichtung (1) für Flachmaterial wie Stoffe, Folien oder dgl., mit einem Tisch (2) zum Auflegen des zu schneidenden Flachmaterials, einem längs des Tisches (2) mittels eines Antriebs hin und her schiebbaren Wagen (3), einem den Tisch (2) übergreifenden, am Wagen (3) um eine vertikale Achse (4) schwenkbar angebrachten Ausleger (6), der eine Zuschneidemaschine (7) stützt, die an ihn um eine vertikale Drehachse (9) drehbar gelagert ist, ist der Ausleger (6) in seiner Längsrichtung teleskopierbar.

FIG. 1

Die Erfindung bezieht sich auf eine Zuschneidevorrichtung nach dem Oberbegriff des Anspruchs 1 bzw, 3.

Eine Zuschneidevorrichtung dieser Arten dient dazu, eine auf dem Tisch abgelegte Stofflage nach einem Schnittmuster mittels der Zuschneidemaschine zu schneiden. Hierzu wird die Zuschneidemaschine entsprechend den Schnittlinien des Schnittmusters manuell auf dem Tisch verschoben, wobei sie am freien Ende des Auslegers gehalten ist, der aufgrund der Verschiebbarkeit des Wagens und der Schwenkbarkeit des Auslegers gegenüber dem Wagen der durch das Schnittmuster vorgegebenen Bewegung der Zuschneidemaschine zu folgen vermag. Die dabei erforderlichen Verschiebekräfte und Schwenkkräfte sind von der Bedienungshand der Bedienungsperson aufzubringen.

In der DE 31 32 127 C2 ist eine Zuschneidevorrichtung beschrieben, deren Wagen durch einen motorischen Antrieb längs des Tisches hin und her verschiebbar ist. Der Ausleger ist ein sog, Gelenkausleger, bestehend aus einem am Wagen um eine vertikale Achse schwenkbar gelagerten hinteren Auslegerarm und einem mit letzterem durch ein Gelenk mit vertikaler Gelenkachse verbundenen vorderen Auslegerarm, der an seinem freien Ende die Zuschneidemaschine stützt.

Die manuelle Verschiebung des durch einen Gelenkausleger gebildeten Stützsystems ist durch die Knickbewegung des Auslegers und daraus resultierenden Ablenkkräften erschwert, die die Schnittbewegung ablenken. Insbesondere dann, wenn die Auslegerarme spitz- oder stumpfwinklig zueinander gerichtet sind, sind aufgrund von sich ergebenden Massenbeschleunigungen große Kräfte zur Verschiebung der Zuschneidemaschine aufzubringen, die das Nachfahren der Zuschnittlinien erschweren.

Der Erfindung liegt die Aufgabe zugrunde, bei Zuschneidevorrichtungen der eingangs angegebenen Arten die Führung der Zuschneidemaschine wenigstens in Teilbereichen des Verstellbereichs zu erleichtern.

Diese Aufgabe wird durch die Merkmale der Ansprüche 1 oder 3 gelöst. Vorteilhafte Weiterbildungen der Erfindung sind in den Unteransprüchen beschrieben.

Bei beiden erfindungsgemäßen Ausgestaltungen gemäß Anspruch 1 und 3 ist der Ausleger in seiner Längsrichtung teleskopierbar. Hierdurch erhält er eine zusätzliche axiale Bewegungsmöglichkeit, die die Führung der Zuschneidemaschine sehr erleichtert. Der Ausleger erhält eine größere Funktionslänge, und deshalb kann die Tischfläche und können auch die Eckenbereiche des Tisches bei leichter Führung besser ausgenutzt werden. Bei einem Ausleger nach Anspruch 3 finden Knickbewegungen nicht statt, und es entfallen deshalb auch störende Ablenkkräfte. Bei einem Gelenkausleger nach Anspruch 4 läßt sich bei der erfindungsgemäßen Ausgestaltung die Zuschneidemaschine auch dann leicht verschieben, wenn die Auslegerarme einen Winkel von annähernd oder 180° einschließen bzw. die Verschieberichtung spitzwinklig zu den Auslegerarmen gerichtet ist. Dabei wird der Ausleger teleskopiert, d.h. auseinandergezogen bzw. zusammengeschoben. Dies erfordert nur verhältnismäßig geringe Verstellkräfte, weil die schwergängige Ausknickbewegung der Auslegerarme zumindest beim Anschieben entfällt. Mit den erfindungsgemäßen Ausgestaltungen läßt sich die Zuschneidemaschine deshalb leichter nach vorgegebenen Schnittmusterlinien führen.

Dabei zeichnet sich insbesondere die erfindungsgemäße Lösung nach Anspruch 3 und auch die nach Anspruch 4 durch eine einfache und kostengünstig herstellbare Bauweise aus, weil sich die erfindungsgemäßen, das Teleskopieren ermöglichenden Führungen einfach und kostengünstig anordnen und herstellen lassen.

Die in den Unteransprüchen enthaltenen Merkmale tragen zur Problemlösung bei und zeichnen sich durch eine einfache, handhabungsfreundliche, klein hauende und gut funktionierende und auch stabile Ausgestaltungen aus. Einige dieser Merkmale ermöglichen außerdem die Verstellung des Wagens in eine günstige Position gegenüber dem hinteren oder vorderen Auslegerarm, wodurch die angestrebte leichte Verstellung des Stützsystems noch verbessert wird. Die erfindungsgemäßen Abstandsbeschränkungen lassen sich durch optische, akustische Meß- und Schaltvorrichtungen oder Näherungsschalter durchführen.

Nachfolgend wird die Erfindung anhand von in einer Zeichnung dargestellten bevorzugten Ausführungsbeispielen näher erläutert. Es zeigt:

Fig. 1     eine erfindungsgemäß ausgestaltete Zuschneidevorrichtung für Flachmaterial wie Stoffe, Folien oder dgl, in der Seitenansicht, teilweise geschnitten;

Fig. 2     einen Ausleger der Zuschneidevorrichtung im vertikalen Schnitt;

Fig. 3     eine erfindungsgemäße Zuschneidevorrichtung in abgewandelter Ausgestaltung in perspektivischer Vorderansicht;

Fig. 4 und 5     Prinzipdarstellungen der Zuschneidevorrichtung in abgewandelten Ausgestaltungen in der Draufsicht.

Die Hauptteile der Zuschneidevorrichtung 1 sind ein Tisch 2, ein an der Rückseite des Tisches 2 horizontal verschiebbarer Wagen 3, der eine vertikale Tragsäule 3a aufweist, ein armförmiger, horizontaler, an der Tragsäule 3 um eine vertikale Schwenkachse 4 schwenkbar (B) gelagerter und sich von der Rückseite des Tisches 2 bis zu der vorderen Bedienungsseite 5 erstreckender Ausleger 6 und eine am vorderen Ende des Auslegers 6 angeordnete Zuschneidemaschine in Form einer Stoßmessermaschine 7, die mit ihrem Stützfuß 8 auf dem Tisch 2 steht und um eine vertikale Drehachse 9 in einem am Ausleger 6 befestigten Drehlager 11 drehbar gelagert ist. Vorzugsweise ist die Stoßmessermaschine 7 im Drehlager 11 auch vertikal verschiebbar C und somit höheneinstellbar und in der jeweiligen Höhenlage vorzugsweise feststellbar. Hierzu kann eine von der Stoßmessermaschine nach oben ragende runde Stange 12 dienen, die das Drehlager 11 nach oben durchsetzt und überragt, wobei vorzugsweise auf dem überragenden Teil der Stange 12 eine Druckfeder 13 angeordnet und zwischen einem endseitigen Wiederlager, z.B. in Form einer Scheibe, und dem Drehlager 11 zwecks Gewichtsausgleich für die Stoßmessermaschine 7 eingespannt sein kann.

Der Wagen 3 ist an einer rückseitig an dem Tisch 2 befestigten horizontalen Führungsschiene 14 mittels Laufrollen 15 horizontal verschiebbar geführt. Am oberen Ende der Tragsäule 3a ist ein die vertikale Schwenkachse 4 enthaltendes Schwenklager 16 ausgebildet. Es weist ein vorzugsweise an der Vorderseite der aus einem Rechteck- oder Vierkantrohr gebildeten Tragsäule 3a verschraubten Lagerteil 17 mit einer vertikalen Lagerbohrung auf, in der ein vertikaler Schwenkzapfen 19 eines an seinem oberen Ende angeordneten Spannkopfes 21 horizontal drehbar gelagert ist. Der Spannkopf 21 weist ein horizontales Durchgangsloch mit einer der Querschnittsform und -größe des Auslegers 6 entsprechenden Querschnittsform und -größe auf und ist im Sinne einer Klemmschelle mit einem den Ausleger 6 übergreifenden Klemmbügel 22 versehen und verschraubt.

Der Ausleger 6 ist durch eine Teleskopstange gebildet mit einem an der Tragsäule 3 gehaltenen hinteren Auslegerarm 23 und einem vorderen Auslegerarm 24, dessen Querschnittsfläche kleiner bemessen ist als die Querschnittsfläche des hinteren Auslegerarms 23, in das vordere Ende des hinteren Auslegerarms 23 koaxial hineinragt und durch in der Längsrichtung des Auslegers 6 hintereinander und zwischen dem hinteren und vorderen Auslegerarm 23,24 angeordneten Kugelführungen 25,26 in ihrer Längsrichtung aneinander geführt sind. In die Kugelführungen 25,26 sind Verdrehsicherungen (nicht dargestellt) integriert. Die Auslegerarme 23,24 bestehen aus Metallrohren, insbesondere aus Aluminiumrohren, runden oder viereckigen Querschnitts. Das Verschiebemaß a des vorderen Auslegerarms 24 beträgt etwa die Hälfte der Tischbreite b. Der hintere Auslegerarm 23 ist im Spannkopf 21 horizontal verschiebbar und feststellbar und somit an unterschiedliche Tischbreiten b anpaßbar. Der durch die Teleskopierbarkeit geschaffene Freiheitsgrad ist mit D bezeichnet.

Die Stoßmessermaschine 7 kann bei Abstützung am Ausleger 6 aufgrund dessen Verschiebbarkeit mit dem Wagen 3 parallel zur Bedienungsseite 5, dessen horizontale Verschwenkbarkeit im Schwenklager 16 und dessen Teleskopierbarkeit auf der gesamten Tischfläche verschoben werden. Die Schwenkbarkeit im Schwenklager 16 und die Teleskopierbarkeit können jeweils wahlweise aufgehoben werden. Hierzu dienen Kupplungen oder Bremsen 27,28, von denen die eine zwischen den Auslegerarmen 23,24 wirksam und vorzugsweise am vorderen Ende des hinteren Auslegerarms 23 angeordnet ist und die andere dem Schwenklager 16 zugeordnet ist und aus zwei übereinander angeordneten Kupplungs- bzw. Bremsteilen gebildet ist, von denen das obere Teil mit dem Schwenkzapfen 19 verbunden ist und das untere Teil mittels einer Konsole an der Tragsäule 3a befestigt ist.

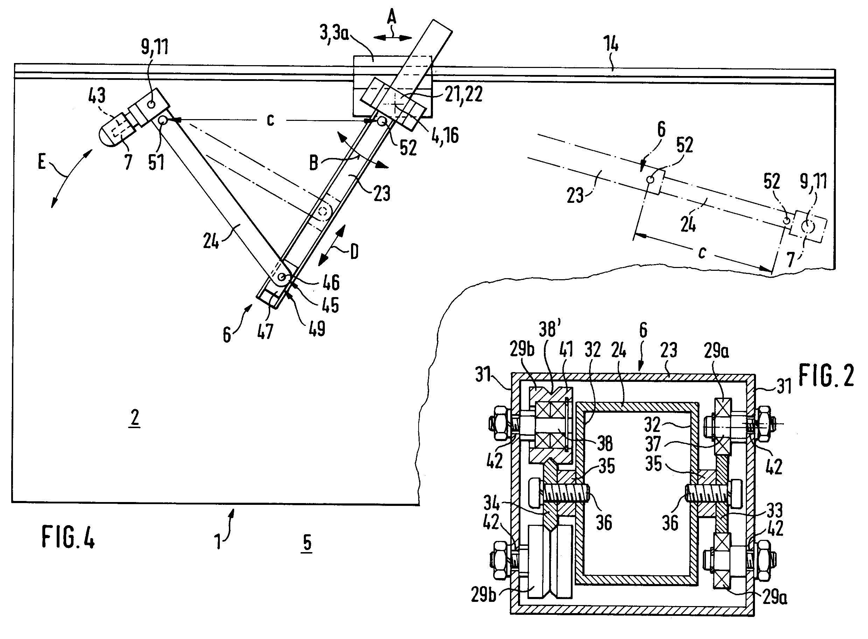

Fig. 2 zeigt im vertikalen Querschnitt ein Ausführungsbeispiel einer Teleskopausgestaltung für den Ausleger 6, wobei die Auslegerarme 23,24 durch Vierkantrohre gebildet sind. Bei dieser Ausgestaltung sind Laufrollen 29 für die Längsverschiebbarkeit des vorderen Auslegerarms 24 im hinteren Auslegerarm 23 vorgesehen, wobei die Laufrollen 29 vorzugsweise zwischen den vertikalen Wänden 31,32 der Auslegerarme 23,24 angeordnet sind. An beiden vertikalen Wänden 32 des vorderen Auslegerarms 24 sind zwei horizontale Führungsleisten 33,34 angeordnet und durch Zwischenstücke 35 von den Wänden 32 distanziert. Die Befestigung erfolgt durch Schrauben 36, die die Führungsleisten 33,34 und die Zwischenstücke 35 in Durchgangslöchern und die Wände 32 in Gewindelöchern durchfassen. Die Führungsleisten 33,34 befinden sich etwa mittig zwischen den Wänden 31,32, wobei der Abstand dazwischen so groß bemessen ist, daß die Laufrollen 29 darin Platz haben. Beide Führungsleisten 33,34 sind hochkantstehende Flachleisten, wobei die eine Führungsleiste 33 eine rechteckige Querschnittsform aufweist, während bei der anderen Führungsleiste 34 die Schmalseiten dachförmig ausgebildet sind. Die Laufrollen 29 sind oberhalb und unterhalb der Führungsleisten 33,34 angeordnet und auf Lagerachsen 37,38 frei drehbar gelagert, die oberhalb und unterhalb der Führungsleisten 33,34 angeordnet sind und mit Gewindezapfen die Wände 31 in Löchern durchfassen und von außen mit Muttern verschraubt sind. Die mit der Führungsleiste 34 rechteckförmiger Querschnittsform zusammenwirkenden Laufrollen 29a haben eine zylindrische Form und können durch Wälzlager gebildet sein, die auf die zugehörigen Lagerachsen 37 aufgesetzt sind. Die der anderen Führungsleiste 34 zugeordneten Laufrollen 29b weisen eine der Dachform dieser Führungsleiste 34 in ihrer Querschnittsform angepaßte Umfangsnut 38 auf, in die die Führungsleiste 34 mit geringem Laufspiel aufgenommen ist. Hierdurch ist der vordere Auslegerarm 24 gegenüber dem hinteren Auslegerarm 23 seitlich lagegesichert. Die Laufrollen 29b sind durch zwei nebeneinander angeordnete Kugellager und einer darauf sitzenden Laufhülse 41 gebilet, in der die Umfangsnut 38 eingearbeitet ist. Da die Laufrollen 29a dazu geeignet sein müssen, seitliche Kräfte aufzunehmen, sind vorzugsweise zwei gleiche Kugellager vorgesehen, die jeweils einseitig Axialkräfte aufnehmen können, wobei die Kugellager einander entgegengesetzt angeordnet sind, so daß das Kugellagerpaar Axialkräfte in beiden Richtungen aufnehmen kann. In Längsrichtung des Auslegers 6 sind wenigstens zwei vorbeschriebene, die zugehörige Führungsleiste 33,34 zwischen sich aufnehmende Rollenpaare vorgesehen. Der vertikale Abstand zwischen den von den Lagerachsen 37,38 durchfaßten Löchern 42 ist so groß bemessen, daß die Führungsleisten 33,34 mit geringem Laufspiel zwischen die Laufrollenpaare passen.

Dem durch die Tragsäule 3a und die zugehörigen Laufrollen 15 gebildeten Wagen 3 kann ein elektromotorischer Antrieb und eine Steuerung (nicht dargestellt) zugeordnet sein, die einen an der Stoßmessermaschine 7, vorzugsweise im Bereich ihres Handgriffs 43 angeordneten Schalter (nicht dargestellt) zum Einschalten dieses Verschiebeantriebs aufweist. Falls ein solcher Antrieb zum Verschieben des Wagens 3 nicht vorgesehen ist, muß der Wagen 3 mittels von der Bedienungsperson aufzubringenden Kräften in der Längsrichtung des Tisches 2 verschoben werden. Dies kann z.B. dann geschehen, wenn die Kupplung oder Bremse 27 zwischen den Auslegerarmen 23,24 in Betrieb ist. Vorzugsweise handelt es sich um elektrisch in Betrieb und außer Betrieb setzbare Kupplungen oder Bremsen 27,28, die durch einen ebenfalls in der Nähe des Handgriffs 43 angeordneten Schalter ein- und abschaltbar sind.

Zur Höhenverstellung der Stoßmessermaschine 7 im Höhenverstellbereich C kann auch ein insbesondere pneumatischer Zylinder-Kolben-Antrieb vorgesehen sein, der in das Drehlager 11 integriert ist und mit dem die Stoßmessermaschine 7 in wahlweisen Höheneinstellungen einstellbar und vorzugsweise feststellbar ist.

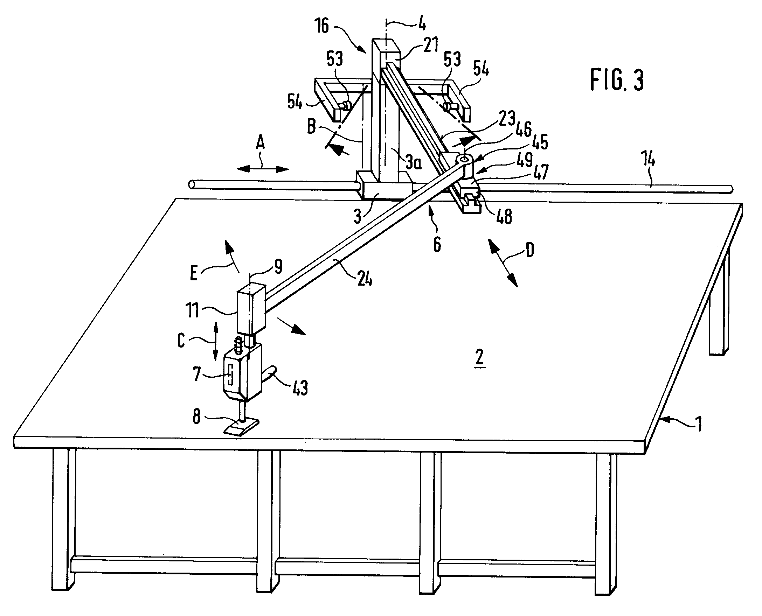

Bei der Zuschneidevorrichtung 1 gemäß Fig. 3, bei der gleiche oder vergleichbare Teile mit gleichen Bezugzeichen versehen sind, ist der Ausleger 6 ein sogenannter Gelenkausleger, d.h. der hintere und der vordere Auslegerarm 23,24 sind durch ein Gelenk 45 mit vertikaler Gelenkachse 46 horizontal schwenkbar (E) miteinander verbunden.

Wenn bei dieser Ausgestaltung die Stoßmessermaschine 7 in Richtung auf die Tragsäule 3a verschoben wird, knickt der Gelenkausleger zur einen oder anderen Seite aus, mit Ausnahme im Totpunkt, in dem die Auslegerarme 23,24 miteinander fluchten.

Das Gelenk 45 ist an einem Schieber 47 angeordnet, der in bzw. an einer am hinteren Auslegerarm 23 ausgebildeten Längsführung 48 in der Längsrichtung des hinteren Auslegerarms 23 frei verschiebbar geführt ist. Aufgrund dieser Ausgestaltung erhält auch dieser Ausleger 6 den weiteren Freiheitsgrad (D), der auch dann eine Verstellung der Stoßmessermaschine 7 ermöglicht, wenn die Auslegerarme 23,24 gestreckt sind oder einen sehr spitzen Winkel einschließen. Bei einer dann erfolgenden Verstellung werden die Auslegerarme zusammengeschoben oder auseinandergezogen. In einer etwa rechtwinklig abgeknickten Position der Auslegerarme 23,24 werden sich die Auslegerarme 23,24 zueinander verdrehen, bevor eine Verschiebung in der Längsführung 48 erfolgt. Die jeweilige Bewegung (Drehen/Schieben) stellt sich in Abhängigkeit der auftretenden Kräfte selbsttätig ein.

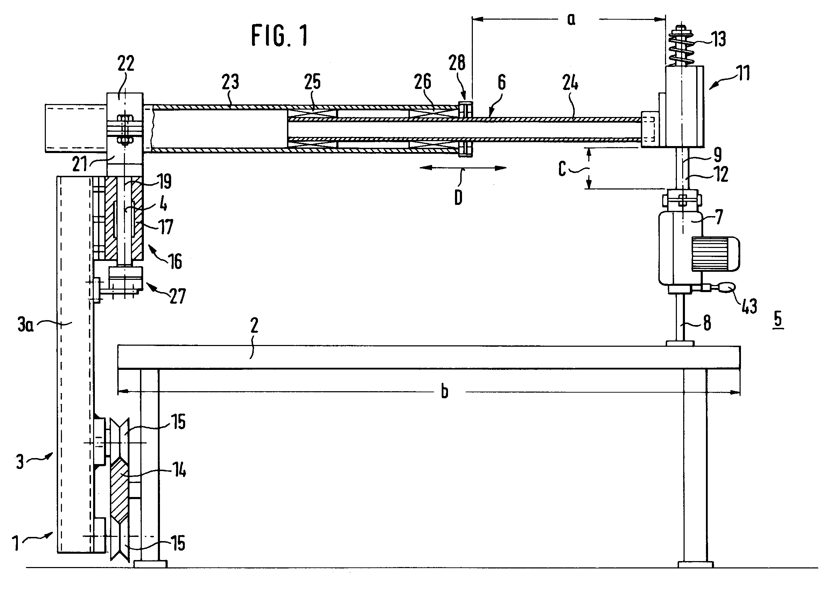

Zur Ausgestaltung der Längsführung 48 kann am hinteren Auslegerarm 23 eine Führungsstange oder ein Führungsprofil angeordnet bzw. ausgebildet sein, auf bzw. in dem der Schieber 47 entsprechender Profilierung aufgenommen ist. Es ist im Rahmen der Erfindung möglich, auch bei der Ausgestaltung nach Fig. 3 dem Schwenklager 16 und auch dem allgemein mit 49 bezeichneten Schiebelager eine Kupplung bzw. Bremse zuzuordnen, die von der Bedienungsseite 5 her ein- und ausschaltbar ist. Es ist auch möglich, ein entsprechendes Schiebe-Drehlager 49 anstelle am hinteren Auslegerarm 23 am vorderen Auslegerarm 24 anzuordnen, so daß die wirksame Länge des vorderen Auslegerarms 24 veränderlich ist. Falls der Zuschneidevorrichtung 1 ein Antrieb zum Verschieben des Wagens 3 zugeordnet ist, ist es von Vorteil, diesen Antrieb mit einer Steuerung zu versehen, die den Wagen 3 dann nach der einen oder anderen Seite verschiebt, wenn ein bestimmter Stellungsbereich der Auslegerarme 23,24 zueinander über- oder unterschritten wird, wodurch eine Streck- oder Einzugsbegrenzung für den Auslegerarm 6 geschaffen wird. Solche Begrenzungen sind aus mehreren Gründen von Bedeutung. Bei einem eingangs als Stand der Technik beschriebenen Gelenkausleger mit gelenkig miteinander verbundenen Auslegerarmen soll vermieden werden, daß der Auslegerarm gestreckt oder annähernd gestreckt wird. In einer solchen Stellung ist die Führung der Stoßmessermaschine und die Schnittlinienfolge sehr erschwert. Ein sehr günstiger Bewegungsbereich für den Ausleger ergibt sich dann, wenn die Auslegerarme in etwa rechtwinklig zueinander stehen. Bei einem Auslegerarm 6 nach Fig. 1 ist man bestrebt, den Hub des Auslegers beim Strecken und auch Einschieben nicht voll auszunutzen, damit bei einer denkbaren Schnittposition aufgrund mangelnder Möglichkeit der Längsverstellung keine Schnittfehler passieren. Letzteres gilt auch für einen Ausleger 6 nach Fig. 3. Ein weiterer Grund, bei einem Ausleger 6 nach Fig. 3 eine völlige Streckung möglichst zu vermeiden, kann darin gesehen werden, daß trotz der Teleskopierbarkeit beim Einschieben eine gewisse Totpunktwirkung vorhanden ist.

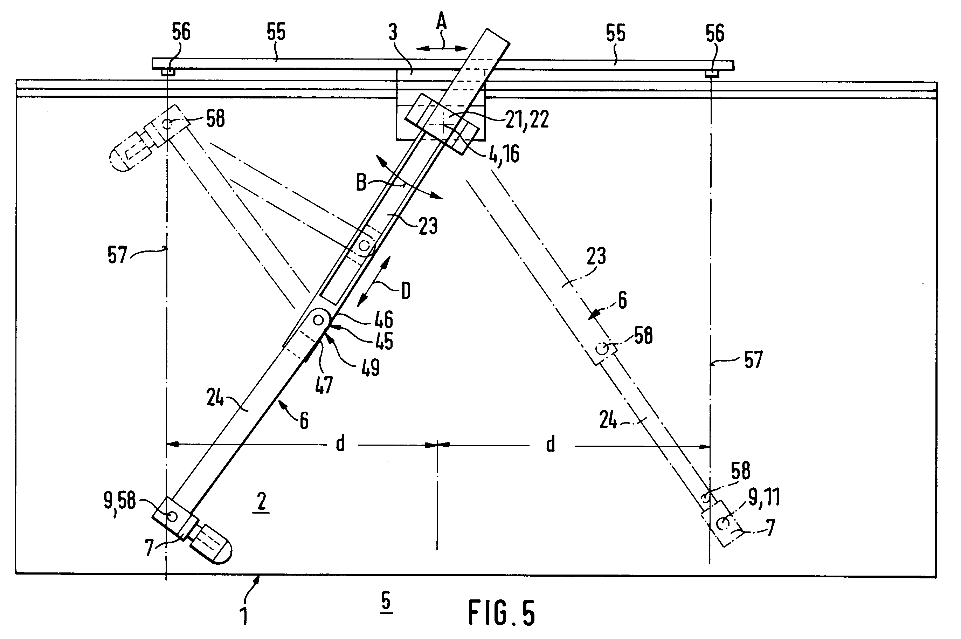

Gemäß Fig. 4 wird eine Lösung vorgeschlagen, mit der eine Ein- oder Ausschubbegrenzung bei einem Gelenkausleger 6 (links) oder einem geraden Teleskopausleger 6 (rechts) erreicht wird und zwar dann, wenn ein minimaler oder maximaler Abstand c zwischen dem Schwenkgelenk 4 und dem Drehgelenk 9 erreicht ist. Dabei ist die Steuerung so ausgeführt, daß beim Erreichen des Mindestabstands dann, wenn der vordere Auslegerarm 24 sich links vom hinteren Auslegerarm 23 befindet, der Antrieb den Wagen nach rechts verschiebt und dann, wenn der vordere Auslegerarm 24 sich rechts vom hinteren Auslegerarm 23 befindet, der Antrieb den Wagen 3 nach links verschiebt. Beim Erreichen des maximalen Abstandes erfolgt die Verschiebung des Wagens 3 in die entgegengesetzte Richtung, also immer in die seitliche Bewegungsrichtung der Zuschneidemaschine 7. Für die dann automatisch gesteuerte Verschiebung kann eine bestimmte Strecke vorgesehen werden, die beispielsweise so groß ist, daß das Drehlager 11 bzw. die Stoßmessermaschine 7 sich bezüglich ihrer Position bei gestreckten Auslegerarmen in einem mittleren Abstand vom Schwenklager 16 bzw. von der Tragsäule 3a befindet. Es sind jedoch auch geringere Verschiebewege für den Wagen 3 vorteilhaft. Nach dieser Verschiebung des Wagens 3 befinden sich die Auslegerarme 23,24 wieder in einer günstigen Position zueinander.

Zur vorbeschriebenen Abstandsüberwachung oder -messung kann eine Meßeinrichtung dienen, die zwei an den Auslegerarmen 23,24 angeordnete und von dessen gemeinsamen Gelenk 45 einen Abstand aufweisende Meßpunkte aufweist und den Abstand dazwischen mißt. Vorzugsweise sind die Meßpunkte und dazugehörige Meßelemente 51,52 an den dem Gelenk 45 abgewandten Enden der Auslegerarme 23,24 oder im Bereich der auslegerarmseitigen Drehlagerteile angeordnet. Das Meßergebnis wird als Signal der Steuereinrichtung für den Antrieb zugeführt. Bei einem geraden Teleskopausleger 6 (in Fig. 4 rechts) bedarf es der Anordnung des Meßelementes 52 am herausragenden Ende des vorderen Auslegerarms 24.

Es ist auch vorteilhaft, die motorische Wagenverschiebung in Abhängigkeit von der Winkelstellung des hinteren Auslegerarms 23 bezüglich der Rück- bzw. Vorderseite des Tisches 2 bzw, der Verschieberichtung des Wagens 3 zu steuern und zwar derart, daß der zwischen dem hinteren Auslegerarm 23 und der Führungsschiene 15 eingeschlossene Winkel eine bestimmte Größe, z.B. etwa 45° nicht unterschreitet (Fig. 3). Hierzu können Winkelmeßelemente, z.B. zwei Schalter 53 einer zugehörigen Schaltung zur Steuerung des Wagenantriebs vorgesehen sein. Bei dem vorliegenden Ausführungsbeispiel sind Endschalter 53 zu beiden Seiten der Tragsäule 3a an horizontal von ihr ausgehenden Haltearmen 54 angeordnet, die jeweils winkelförmig bzw. insgesamt U-förmig angeordnet sein können. Wenn der hintere Auslegerarm 23 den linken Endschalter 53 betätigt, wird der Wagen 3 durch den Antrieb um eine vorbestimmte Strecke, z.B. so weit nach links verschoben, bis der hintere Auslegerarm 23 etwa rechtwinklig zur Rückseite des Tisches 2 steht. Wenn der hintere Auslegerarm 23 den rechten Endschalter 53 betätigt, wird der Wagen 3 entsprechend nach rechts verschoben.

Bei dem Ausführungsbeispiel nach Fig. 5 sind Streckbegrenzungen für einen Gelenkausleger (links) und für einen geraden Teleskopausleger (rechts) geschaffen. Bei dieser Ausgestaltung sind zu beiden Seiten der Stützsäule 3a oder des Wagens 3 seitlich auskragende Haltearme 55 vorgesehen, an denen jeweils ein Signalgeber 56 angeordnet ist, der eine sich quer zur Bewegungsrichtung A des Wagens 3 erstreckende Begrenzung 57 für die zugehörige seitliche Schwenkbewegung des Auslegers 6 markiert. Die beiden Signalgeber 56 markieren somit zwischen den beiden Begrenzungen 57 ein Bewegungsfeld für den zugehörigen Ausleger 6. Bei den Begrenzungen 57 kann es sich um Lichtschranken handeln, die vorzugsweise in senkrechten Querebenen angeordnet sind. Am Ausleger 6 ist ein Signalempfänger 58 angeordnet, der dann, wenn er in die eine oder die andere Begrenzung 57 hineinbewegt wird, das Signal des zugehörigen Signalgebers 56 empfängt oder ein Signal abgibt. Hierdurch wird der Antrieb des Wagens 3 eingeschaltet und mittels einer Steuerung um ein bestimmtes in die Richtung verschoben, in die der Signalempfänger 58 bei seiner Auslösung bewegt worden ist. Wenn z.B. der Signalempfänger 58 bei einer Bewegung nach links in die Begrenzung 57 gerät, wird der Wagen 3 ebenfalls nach links verschoben. Wenn der Signalgeber 58 bei einer Bewegung des Auslegers 6 nach rechts in die rechte Begrenzung 57 gerät, wird der Wagen 3 nach rechts verschoben. Das Maß dieser bestimmten Verschiebung kann je nach Zweckbestimmung unterschiedlich sein. Der Signalempfänger 58 kann z.B. am hinteren Auslegerarm 23 angeordnet sein, z.B. im Bereich dessen vorderen Endes. Eine solche Ausgestaltung stellt eine Alternativlösung zu der Ausgestaltung gemäß Fig. 3 dar, weil bezüglich der Mittelstellung des hinteren Auslegerarms 23 seine seitliche Schwenkbewegung begrenzt wird. Bei einer solchen Ausgestaltung kann das Maß der Verschiebung des Wagens 3 so groß bemessen sein, daß der Ausleger 6 bzw. der hintere Auslegerarm 23 sich nach der Verschiebung in seiner Mittelstellung befindet.

Der Signalempfänger 58 kann auch am vorderen Auslegerarm 24 angeordnet sein, z.B. im Bereich dessen freien Endes. Diese Anordnung kann dazu dienen, die Auslegerarme 23,24 in einem bewegungsgünstigen Stellungsbereich zueinander zu halten, in dem die Verschiebung des Auslegers 6 durch Führung an der Stoßmessermaschine 7 leicht ist. Dies ist dann gegeben, wenn die Auslegerarme 23,24 in etwa einen rechten Winkel einschließen. Wenn die Anordnung zur Streckbegrenzung des Atslegers 6 dienen soll, kann die Anordnung so getroffen sein, daß beim Hineinbewegen des Signalempfängers 58 in die zugehörige Begrenzung 57 die Auslegerarme 23,24 nicht völlig gestreckt sind oder der gerade Teleskopausleger 6 noch nicht völlig nach vorne teleskopiert ist. Bei allen drei vorbeschriebenen Ausführungsbeispielen führt die zugehörige Verschiebung des Wagens 3 dazu, daß der Auslegerarm 6 nach dieser Verschiebung und weiterer Verlagerung der Begrenzung 57 der Auslegerarm 6 in die gleiche seitliche Richtung weiterbewegt werden kann.

Die anhand der Figuren beschriebenen Ausgestaltungen eignen sich sowohl für einen herkömmlichen Gelenkausleger, bei dem die Auslegerarme nicht teleskopierbar nur durch ein Gelenk miteinander verbunden sind, und auch für teleskopierbare Ausleger 6 gemäß Fig. 1 oder 3. Bei einem Ausleger 6 nach Fig. 1 können die vorbeschriebenen Meß- oder Signalelemente am hinteren und/oder vorderen Auslegerarm 23,24 entsprechend angeordnet sein. Der Abstand d der Begrenzungen 57 von der Wagenmitte ist jeweils entsprechend zu bemessen.

Es ist vorteilhaft, an der Zuschneidevorrichtung 1 beide Schalt- bzw. Steuerungsvorrichtungen gemäß Fig. 4 und 5 und ggfls, auch die nach Fig. 3 vorzusehen, um den Ausleger 6 in einer für zum Führen günstigen Position zu halten.

In dem Fall, in dem der Ausleger 6 nur auf einer Seite des Wagens 3 benutzt wird, genügt es natürlich, wenn die Steuerungsvorrichtung nur auf einer Seite des Wagens 3 angeordnet ist.

**Patentansprüche**

1. Zuschneidevorrichtung (1) für Flachmaterial wie Stoffe, Folien oder dgl., mit einem Tisch (2) zum Auflegen des zu schneidenden Flachmaterials, einem längs des Tisches (2), insbesondere mittels eines Antriebs hin und her schiebbaren Wagen (3), einem den Tisch (2) übergreifenden, am Wagen (3) um eine vertikale Achse (4) schwenkbar angebrachten Ausleger (6), der eine Zuschneidemaschine (7) stützt, die an ihn um eine vertikale Drehachse (9) drehbar gelagert ist,
   dadurch **gekennzeichnet,**
   daß der Ausleger (6) in seiner Längsrichtung teleskopierbar ist.

2. Zuschneidevorrichtung nach Anspruch 1,
   dadurch **gekennzeichnet,**
   daß der Ausleger (6) aus zwei in seiner Längsrichtung hintereinander angeordneten Auslegerarmen (23,24) besteht, von denen der bezüglich der Bedienungsseite (7) vordere Auslegerarm (24) teleskopierbar ist.

3. Zuschneidevorrichtung (1) für Flachmaterial wie Stoffe, Folien oder dgl., mit einem Tisch (2) zum Auflegen des zu schneidenden Flachmaterials, einem längs des Tisches (2), insbesondere mittels eines Antriebs hin und her schiebbaren Wagen (3), einem den Tisch (2) übergreifenden Gelenkausleger (6), mit einem am Wagen (3) um eine vertikale Schwenkachse (4) schwenkbar angebrachten, bezüglich der Bedienungsseite (7) hinteren Auslegerarm (23) und einem mit letzterem durch ein Gelenk (45) mit vertikaler Gelenkachse (46) schwenkbar angebrachten vorderen Auslegerarm (24), wobei an letzterem in einem Abstand vom Gelenk (45) eine Zuschneidemaschine (7) um eine vertikale Drehachse (9) drehbar gelagert ist,
   dadurch **gekennzeichnet,**
   daß das Gelenk (45) an dem hinteren oder vorderen Auslegerarm (23,24) in dessen Längsrichtung verschiebbar geführt ist.

4. Zuschneidevorrichtung nach Anspruch 3,
   dadurch **gekennzeichnet,**
   daß der hintere und/oder der vordere Auslegerarm (23,24) teleskopierbar sind.

5. Zuschneidevorrichtung nach wenigstens einem der vorherigen Ansprüche,
   dadurch **gekennzeichnet,**
   daß der teleskopierbare Ausleger (6) oder der bzw, die Auslegerarme jeweils aus zwei geraden Teleskopteilen (23,24) bestehen, die in ihrer Längsrichtung verschiebbar aneinander geführt sind.

6. Zuschneidevorrichtung nach Anspruch 5,
   dadurch **gekennzeichnet,**
   daß der vordere Auslegerarm (24) bzw, Teleskopteil in seiner Querschnittsgröße kleiner bemessen ist, als der hintere Auslegerarm (23) bzw. Teleskopteil, in dessen vorderes Ende hineinragt und darin längsverschiebbar geführt ist.

7. Zuschneidevorrichtung nach Anspruch 6,
dadurch **gekennzeichnet,**
daß die Auslegerarme (23,24) aus vierkantigem Metallrohr bestehen, insbesondere Aluminium.

8. Zuschneidevorrichtung nach Anspruch 7,
dadurch **gekennzeichnet,**
daß auf zwei einander gegenüberliegenden Seiten zwischen den Auslegerarmen (23,24) jeweils eine flache, vorzugsweise hochkant angeordnete Laufschiene (33,34) und diese über- und untergreifende, vorzugsweise am hinteren Auslegerarm (23) befestigte Laufrollen (29a,b) angeordnet sind.

9. Zuschneidevorrichtung nach Anspruch 8,
dadurch **gekennzeichnet,**
daß die Laufschienen (33,34) und die Laufrollen (29a,29b) zwischen den vertikalen Wänden der Auslegerarme (23,24) angeordnet sind und der vordere Auslegerarm (24) ein größeres Höhen-Breiten-Verhältnis aufweist als der hintere Auslegerarm (23).

10. Zuschneidevorrichtung nach Anspruch 8 oder 9,
dadurch **gekennzeichnet,**
daß die Laufflächen der einen Laufschiene (34) vorzugsweise dachförmig profiliert ist und die zugehörigen Laufrollen (29b) entsprechend profiliert sind.

11. Zuschneidevorrichtung nach wenigstens einem der vorherigen Ansprüche,
dadurch **gekennzeichnet,**
daß die Zuschneidemaschine (7) höhenverstellbar und vorzugsweise in der jeweiligen Verstellhöhe arretierbar ist.

12. Zuschneidevorrichtung nach Anspruch 11,
dadurch **gekennzeichnet,**
daß das Drehlager (11) durch einen vorzugsweise pneumatischen Zylinder-Kolben-Antrieb gebildet ist, dessen Kolbenstange (12) nach unten ragt und die Zuschneidemaschine (7) trägt und vorzugsweise durch eine Druckfeder (13) in ihre eingeschobene Stellung vorgespannt ist, die insbesondere auf einem das Drehlager (11) überragenden Stangenabschnitt zwischen einem endseitigen Wiederlager und dem Drehlager (11) eingespannt ist.

13. Zuschneidevorrichtung nach wenigstens einem der vorherigen Ansprüche,
dadurch **gekennzeichnet,**
daß der hintere Auslegerarm (23) in einem horizontalen Durchgangsloch eines Drehkopfes (21) horizontal verschiebbar und in der jeweiligen Verschiebestellung feststellbar, insbesondere klemmbar ist.

14. Zuschneidevorrichtung nach wenigstens einem der Ansprüche 3 bis 13,
dadurch **gekennzeichnet,**
daß unter oder vorzugsweise auf dem hinteren, insbesondere im Querschnitt viereckigen Auslegerarm (23) ein vorzugsweise im Querschnitt viereckiger Schieber (47) in einer längs des hinteren Auslegerarms (23) gerichteten Führung (48) verschiebbar geführt ist, an dem ein vertikaler Drehzapfen fest angeordnet ist, auf dem der vordere Auslegerarm (24) drehbar gelagert ist.

15. Zuschneidevorrichtung nach wenigstens einem der vorherigen Ansprüche,
dadurch **gekennzeichnet,**
daß zwischen dem hinteren Auslegerarm (23) und dem Wagen (3) und/oder zwischen dem vorderen und hinteren Auslegerarm (23,24) und/oder am Schieber (47) eine Kupplung oder Bremse (27,28) zur wahlweisen Feststellung in der jeweiligen Bewegungsposition angeordnet ist bzw, sind.

16. Zuschneidevorrichtung nach wenigstens einem der vorherigen Ansprüche,
**gekennzeichnet** durch
eine Einrichtung (51,52;56,58) zur Begrenzung einer bestimmten Stellung der Auslegerarme (23,24) zueinander mit einer Steuerschaltung für den Antrieb des Wagens (3), die beim Erreichen einer Stellungsbereichsgrenze (c,d) den Wagen (3) nachführt.

17. Zuschneidevorrichtung nach Anspruch 16,
dadurch **gekennzeichnet,**
daß die Einrichtung eine Abstandsmeß- oder Abstandsüberwachungseinrichtung aufweist.

18. Zuschneidevorrichtung nach Anspruch 17,
dadurch **gekennzeichnet,**
daß vorzugsweise zu beiden Seiten des Wagens (3) ein Signalelement (56) oder dgl. mittelbar oder unmittelbar am Wagen (3) angeordnet ist, der eine sich quer, vorzugsweise rechtwinklig zur Bewegungsrichtung (A) des Wagens (3) über den Tisch (2) erstreckende Schranke (57) erzeugt, und daß am hinteren oder am vorderen Auslegerarm (23,24) ein Signalempfänger (58) oder Meßelement angeordnet ist, bei dessen Hineinschwenkung in die Schranke (57) der Wagen (3) verschoben wird.

19. Zuschneidevorrichtung nach Anspruch 17 oder 18,
   dadurch **gekennzeichnet,**
   daß die oder eine weitere Abstandsmeß- oder Abstandsüberwachungseinrichtung zwischen dem hinteren und dem vorderen Auslegerarm (23,24) wirksam ist.

20. Zuschneidevorrichtung nach wenigstens einem der Ansprüche 16 bis 19,
   dadurch **gekennzeichnet,**
   daß die dem Ausleger (6) zugehörigen Signal- oder Meßelemente (51,52;58) im Bereich der dem Wagen (3) abgewandten Enden der Auslegerarme (23,24) angeordnet sind.

21. Zuschneidevorrichtung nach wenigstens einem der Ansprüche 16 bis 20,
   dadurch **gekennzeichnet,**
   daß zwischen dem Wagen (3) und dem hinteren Auslegerarm (23) eine Winkelmeßeinrichtung vorgesehen ist, die bei Überschreitung eines vorgegebenen Winkels eine Nachführung des Wagens (3) veranlaßt, und vorzugsweise durch insbesondere zu beiden Seiten des Wagens (3) angeordnete Endschalter (53) gebildet ist, die beim horizontalen Schwenken des hinteren Auslegerarms (23) durch diesen betätigt werden.

22. Zuschneidevorrichtung nach wenigstens einem der Ansprüche 16 bis 21,
   dadurch **gekennzeichnet,**
   daß die dem Wagen (3) zugehörigen Signal- oder Meßelemente (53;56) an vom Wagen (3), insbesondere von einer vertikalen Tragsäule (3a) seitlich auskragenden Haltearmen (54;55) angeordnet sind.

FIG. 1

FIG. 4

FIG. 2

EP 0 517 194 A2

FIG. 3

EP 0 517 194 A2

FIG.5

EP 0 517 194 A2